# EUROPEAN PATENT APPLICATION

(11) **EP 4 681 990 A1**
(43) Date of publication of application: **21.01.2026**
(21) Application number: 23932523.6
(22) Date of filing: 14.04.2023
(51) Int. Cl.: B60R 1/072, B60R 16/023

(54) **REARVIEW MIRROR CONTROL METHOD AND APPARATUS, AND VEHICLE**

(71) Applicant: Shenzhen Yinwang Intelligent Technologies Co., Ltd., Shenzhen, Guangdong 518110 (CN)
(72) Inventor: CUI, Xianjuan, Shenzhen, Guangdong 518129 (CN); ZHANG, Daiqi, Shenzhen, Guangdong 518129 (CN); YANG, Jinghuan, Shenzhen, Guangdong 518129 (CN); CHEN, Xiaoli, Shenzhen, Guangdong 518129 (CN)
(74) Representative: Pfenning, Meinig & Partner mbB
(86) International application number: PCT/CN2023/088504
(87) International publication number: WO 2024/212242

(57) **Abstract**

A rear view mirror control method is provided and may be performed by a control apparatus. The control apparatus may be implemented as a component in a vehicle, for example, a chip, a chip system, or another functional module that can invoke a program and execute the program. The method includes: The control apparatus determines an intention of a user for controlling the vehicle to enter a traveling status or an intention of the user for controlling the vehicle to switch the traveling status, where the traveling status may include, for example, a forward traveling state or a backward traveling state, to automatically adjust a rear view mirror and avoid manual adjustment on the rear view mirror, so as to improve driving experience and traveling safety of the user especially when the traveling status is frequently entered or the traveling status is frequently switched. The control apparatus adjusts the rear view mirror to a first target location with reference to the control intention of the user for the vehicle and human eye location data, so that a location or an angle of the rear view mirror can match the user, and a preferred angle of view can be provided for the user. An apparatus and a storage medium are further disclosed.

## Description

### TECHNICAL FIELD

This application relates to the field of artificial intelligence technologies, and in particular, to a rear view mirror control method and apparatus, and a vehicle.

### BACKGROUND

A rear view mirror is an important part for safe traveling of a vehicle. When the vehicle travels in different traveling states, for example, traveling forward or traveling backward (or referred to as reverse), the rear view mirror is adjusted to different locations (or angles) to match the traveling status of the vehicle, so that a user can observe a road condition and an obstacle behind the vehicle from a preferred angle of view. However, when the vehicle switches between different traveling states, the user needs to manually adjust the location of the rear view mirror, to obtain the preferred angle of view in the traveling status. This manual adjustment process for the rear view mirror is complex. Especially when the traveling status is frequently switched, driving experience of the user is poor, and traveling safety is affected.

### SUMMARY

Embodiments of this application provide a rear view mirror control method and apparatus, and a vehicle, to implement intelligent adjustment of a rear view mirror in different traveling states in a vehicle use process, so as to improve user experience.

According to a first aspect, an embodiment of this application provides a rear view mirror control method. The method may be performed by a control apparatus (for example, a cockpit controller 110 in a vehicle 100 in the following). The control apparatus may be implemented as a component in a vehicle, for example, a chip, a chip system, or another functional module that can invoke a program and execute the program. For ease of understanding, the following describes the method by using the control apparatus as an execution body.

For example, the method includes: The control apparatus determines that a user has an intention for controlling a vehicle to enter a traveling status or an intention for controlling the vehicle to switch the traveling status, where the traveling status may include, for example, a forward traveling state or a backward traveling state, to intelligently adjust a rear view mirror, and avoid manual adjustment on the rear view mirror, so as to improve driving experience and traveling safety of the user especially when the traveling status is frequently entered or the traveling status is frequently switched.

Further, the control apparatus adjusts the rear view mirror to a first target location with reference to the control intention of the user for the vehicle and human eye location data, so that a location (or an angle) of the rear view mirror can match the user, and a preferred angle of view can be provided for the user.

The location of the rear view mirror may also refer to an angle of the rear view mirror, and controlling the rear view mirror to adjust a location may also refer to controlling the rear view mirror to adjust an angle.

In an example, the control apparatus may determine, in response to a braking operation input by the user when the vehicle is in a parking gear, that the control intention of the user for the vehicle is the intention for entering the traveling status, and then control the rear view mirror to be adjusted to the first target location, to match the intention of the user for controlling the vehicle to enter the traveling status, so as to implement automatic adjustment of the rear view mirror when the vehicle enters the traveling status.

In another example, the control apparatus may determine, in response to a gear switching operation input by the user, that the control intention of the user for the vehicle is the intention for switching the traveling status, where the gear switching operation is used to switch the vehicle from a first gear to a second gear, the second gear is a reverse gear or a drive gear, and the first gear is different from the second gear. In this way, the rear view mirror is controlled to be adjusted to the first target location, so that the location of the rear view mirror matches the intention of the user for controlling the vehicle to switch the traveling status, thereby implementing automatic adjustment of the rear view mirror when the vehicle switches the traveling status.

For example, when the control intention is the intention for entering the traveling status, the control apparatus may control, based on the human eye location data, the rear view mirror of the vehicle to be adjusted to a first location; or when the control intention is the intention for switching the traveling status, the control apparatus may control, based on the human eye location data, the rear view mirror of the vehicle to be adjusted to a second location. When human eye locations are the same, different control intentions correspond to different locations of the rear view mirror, so that the locations of the rear view mirror are adaptively adjusted in different control intentions, the adjusted location of the rear view mirror can match the control intention of the driver, and a preferred angle of view is provided for the driver.

In a possible implementation, the control apparatus may obtain the human eye location data of the user, where the human eye location data is determined based on a collected user image.

When the control intention is the intention for controlling the vehicle to enter the traveling status, the control apparatus may collect the user image in response to the user taking the vehicle. In this way, the control apparatus obtains the human eye location data in time when the vehicle enters the traveling status, to implement automatic adjustment of the rear view mirror when the vehicle enters the traveling status.

When the control intention is the intention for controlling the vehicle to switch the traveling status, the control apparatus may collect the user image when the vehicle travels in a first gear, where the first gear is a gear of the vehicle before switching of the traveling status. The user image is collected when the vehicle travels in the gear before switching, so that the control apparatus obtains the human eye location data in time in response to the intention for controlling the vehicle to switch the traveling status, to implement automatic adjustment of the rear view mirror when the traveling status is switched. In addition, the control apparatus may collect the user image when the vehicle switches to the second gear for traveling, for example, use the user image at a moment when the vehicle just switches to the second gear, and may also obtain the human eye location data in time in response to the intention for controlling the vehicle to switch the traveling status. This is not limited to collecting the user image based on traveling in the first gear.

In a process of obtaining the human eye location data, to ensure validity of the human eye location data, in a possible implementation, the control apparatus may recognize the user image to obtain head pose information of the user; determine, based on the head pose information, whether duration in which a face of the user faces a first direction reaches preset duration; and determine the human eye location data based on the user image when the duration in which the face of the user faces the first direction reaches the preset duration. This can avoid a problem that the human eye location data is unstable because a location of an eye of the user changes with a head location, thereby ensuring that adjustment of the rear view mirror can provide a preferred angle of view for the user.

When the control intention is the intention for controlling the vehicle to enter the traveling status, considering that the user may look at a front direction of the vehicle when the vehicle is started, the first direction may be the front direction of the user. When the control intention is the intention for controlling the vehicle to switch the traveling status, considering that the user may look at a rear view mirror inside the vehicle, a left rear view mirror of the vehicle, or a right rear view mirror of the vehicle when switching the traveling status, the first direction may be a left direction, a left front direction, a right direction, a right rear direction, a front direction, or the like of the user. In this way, the control apparatus can obtain valid human eye location data.

In a process of obtaining the human eye location data, to ensure validity of the human eye location data, in a possible implementation, the human eye location data is determined based on the user image when a seat taken by the user is not adjusted in a first time period, where the first time period is collection duration of the user image.

In a possible implementation, when the control apparatus fails to obtain the human eye location data, the control apparatus may display prompt information, to indicate that the duration in which the face of the user faces the first direction reaches the preset duration, and/or indicate the user to stop adjusting the seat taken by the user. In this way, the control apparatus can obtain valid human eye location data in time, to accurately adjust the rear view mirror.

In some scenarios, gear switching may be performed a plurality of times in a short time. For example, when a vehicle performs reverse parking, a gear is switched a plurality of times to adjust a vehicle body direction, or a driver quickly performs gear switching a plurality of times due to a wrong gear control. In this case, the rear view mirror does not need to be frequently adjusted. For example, when the vehicle performs reverse parking, although the vehicle switches from the backward traveling state to the forward traveling state, the rear view mirror may remain at a location corresponding to the backward traveling state, and does not need to be frequently switched. Therefore, in this embodiment, when determining that a vehicle speed of the vehicle is greater than or equal to a speed threshold, the control apparatus may control, based on the control intention and the human eye location data, the rear view mirror of the vehicle to be adjusted to the first target location, to avoid controlling the rear view mirror to perform unnecessary location adjustment.

In a possible implementation, the control apparatus determines a displacement between the first target location and a current location of the rear view mirror based on the control intention and the human eye location data; and when the displacement is greater than or equal to a displacement threshold, controls the rear view mirror of the vehicle to be adjusted to the first target location. When the displacement between the first target location and the current location of the rear view mirror is large, the rear view mirror is adjusted, so that high overheads of the control apparatus due to frequent adjustment of the rear view mirror can be avoided.

To further improve vehicle use convenience and traveling safety, the control apparatus may obtain a first adjustment instruction input by the user, where the first adjustment instruction instructs to adjust the rear view mirror of the vehicle, and control, based on the first adjustment instruction and the human eye location data, the rear view mirror to be adjusted to a second target location.

To further implement fine adjustment of the rear view mirror, and enable adjustment of the rear view mirror to meet a use requirement of the user, the control apparatus obtains, within a preset time after obtaining the first adjustment instruction, a second adjustment instruction input by the user, where the second adjustment instruction instructs to adjust the rear view mirror of the vehicle in a target direction; and controls, based on the second adjustment instruction, the rear view mirror to be adjusted from the second target location to a third target location in the target direction.

Optionally, the first adjustment instruction and/or the second adjustment instruction include/includes an instruction (a voice control instruction) input by the user through audio data, or the first adjustment instruction and/or the second adjustment instruction include/includes an instruction input by the user by operating a physical button. When the adjustment instruction is the instruction input by the user through the audio data, better human-machine interaction convenience is provided. When the adjustment instruction is the instruction input by the user by operating the physical button, operation reliability is higher.

In a possible implementation, the control apparatus may determine a to-be-adjusted rear view mirror based on the head pose information of the user, so that one or more of a plurality of rear view mirrors can be controlled, thereby improving flexibility of adjusting the rear view mirror.

According to a second aspect, an embodiment of this application provides a control apparatus, including: a processing unit, configured to determine a control intention of a user for a vehicle, where the control intention includes an intention for controlling the vehicle to enter a traveling status or an intention for controlling the vehicle to switch the traveling status; and a control unit, configured to control, based on the control intention and human eye location data, a rear view mirror of the vehicle to be adjusted to a first target location.

In a possible implementation, the processing unit is specifically configured to determine, in response to a braking operation input by the user when the vehicle is in a parking gear, that the control intention of the user for the vehicle is the intention for entering the traveling status.

In a possible implementation, the processing unit is specifically configured to determine, in response to a gear switching operation input by the user, that the control intention of the user for the vehicle is the intention for switching the traveling status, where the gear switching operation is used to switch the vehicle from a first gear to a second gear, the second gear is a reverse gear or a drive gear, and the first gear is different from the second gear.

In a possible implementation, the control unit is specifically configured to: when the control intention is the intention for entering the traveling status, control, based on the human eye location data, the rear view mirror of the vehicle to be adjusted to a first location; or when the control intention is the intention for switching the traveling status, control, based on the human eye location data, the rear view mirror of the vehicle to be adjusted to a second location.

In a possible implementation, the apparatus further includes: an obtaining unit, configured to obtain the human eye location data of the user, where the human eye location data is determined based on a collected user image.

In a possible implementation, the control intention is an intention for controlling the vehicle to enter the traveling status, and the apparatus further includes: a collection unit, configured to collect the user image in response to the user taking the vehicle.

In a possible implementation, the control intention is the intention for controlling the vehicle to switch the traveling status, and the apparatus further includes: a collection unit, configured to collect the user image when the vehicle travels in the first gear or the second gear, where the first gear is a gear of the vehicle before switching of the traveling status, and the second gear is a gear of the vehicle after switching of the traveling status.

In a possible implementation, the processing unit is further configured to: recognize the user image to obtain head pose information of the user; determine, based on the head pose information, whether duration in which a face of the user faces a first direction reaches preset duration; and determine the human eye location data based on the user image when the duration in which the face of the user faces the first direction reaches the preset duration.

In a possible implementation, when the control intention is the intention for controlling the vehicle to enter the traveling status, and the first direction is a front direction of the user.

In a possible implementation, the processing unit is further configured to: determine the human eye location data based on the user image when a seat taken by the user is not adjusted in a first time period, where the first time period is collection duration of the user image.

In a possible implementation, the control apparatus further includes a human-machine interaction unit, where the human-machine interaction unit is configured to: if the human eye location data fails to be obtained, display prompt information, where the prompt information indicates that the duration in which the face of the user faces the first direction reaches the preset duration, and/or indicates that adjustment of the seat taken by the user is stopped.

In a possible implementation, the control intention is an intention for controlling the vehicle to switch from a backward traveling state to a forward traveling state; and the control unit is specifically configured to: determine whether a vehicle speed of the vehicle in the forward traveling state is greater than or equal to a speed threshold; and when the vehicle speed of the vehicle is greater than or equal to the speed threshold, control, based on the control intention and the human eye location data, the rear view mirror of the vehicle to be adjusted to the first target location.

In a possible implementation, the control unit is specifically configured to: determine a displacement between the first target location and a current location of the rear view mirror based on the control intention and the human eye location data; and when the displacement is greater than or equal to a displacement threshold, control the rear view mirror of the vehicle to be adjusted to the first target location.

In a possible implementation, the control unit is specifically configured to: obtain a first adjustment instruction input by the user, where the first adjustment instruction instructs to adjust the rear view mirror of the vehicle; and control, based on the first adjustment instruction and the human eye location data, the rear view mirror to be adjusted to a second target location.

In a possible implementation, the control unit is specifically configured to: obtain, within a preset time after obtaining the first adjustment instruction, a second adjustment instruction input by the user, where the second adjustment instruction instructs to adjust the rear view mirror of the vehicle in a target direction; and control, based on the second adjustment instruction, the rear view mirror to be adjusted from the second target location to a third target location in the target direction.

In a possible implementation, the first adjustment instruction and/or the second adjustment instruction may be an instruction input by the user through audio data or an instruction input by the user by operating a physical button.

In a possible implementation, the processing unit is further configured to determine a to-be-adjusted rear view mirror based on the human eye location data. According to a third aspect, an embodiment of this application provides a control apparatus, including a processor and a memory. The memory is configured to store a computer program, and the processor is configured to invoke and run the computer program stored in the memory, to perform the method according to the first aspect and the possible implementations of the first aspect.

According to a fourth aspect, an embodiment of this application provides a chip, including a processor, configured to invoke a computer program from a memory and run the computer program, so that a device on which the chip is installed performs the method according to the first aspect and the possible implementations of the first aspect.

According to a fifth aspect, an embodiment of this application provides a computer-readable storage medium, configured to store a computer program. The computer program enables a computer to perform the method according to the first aspect and the possible implementations of the first aspect.

According to a sixth aspect, an embodiment of this application provides a computer program product, including computer program instructions. The computer program instructions enable a computer to perform the method according to the first aspect and the possible implementations of the first aspect.

According to a seventh aspect, an embodiment of this application provides a computer program, and the computer program enables a computer to perform the method according to the first aspect and the possible implementations of the first aspect.

According to an eighth aspect, an embodiment of this application provides an apparatus, including a logic circuit and an input/output interface. The input/output interface is configured to receive a signal from a communication apparatus other than the apparatus and transmit the signal to the logic circuit, or send a signal from the logic circuit to a communication apparatus other than the apparatus. The logic circuit is configured to execute code instructions to perform the method according to the first aspect and the possible implementations of the first aspect.

According to a ninth aspect, an embodiment of this application provides a vehicle, including the control apparatus according to the second aspect or the possible implementations of the second aspect.

For beneficial effects of the control apparatus provided in the possible implementations of the second aspect and the ninth aspect, refer to the beneficial effects achieved by the first aspect and the possible implementations of the first aspect. Details are not described herein again.

### BRIEF DESCRIPTION OF DRAWINGS

FIG. 1 is a diagram of a structure of a vehicle according to an embodiment of this application;
FIG. 2 is a schematic flowchart of a rear view mirror control method according to an embodiment of this application;
FIG. 3a is a diagram of a rear view mirror control method according to an embodiment of this application;
FIG. 3b is a diagram of a rear view mirror control method according to an embodiment of this application;
FIG. 3c is a diagram of a rear view mirror control method according to an embodiment of this application;
FIG. 4 is a schematic flowchart of another rear view mirror control method according to an embodiment of this application;
FIG. 5a is a diagram of a rear view mirror control method according to an embodiment of this application;
FIG. 5b is a diagram of a rear view mirror control method according to an embodiment of this application;
FIG. 5c is a diagram of a rear view mirror control method according to an embodiment of this application;
FIG. 6 is a block diagram of a vehicle control apparatus according to an embodiment of this application; and
FIG. 7 is a block diagram of another vehicle control apparatus according to an embodiment of this application.

### DESCRIPTION OF EMBODIMENTS

The following describes the technical solutions in embodiments of this application with reference to the accompanying drawings in embodiments of this application.

The technical solutions in embodiments of this application may be executed by a mobile device having any appearance or an apparatus deployed in a mobile device, for example, an intelligent vehicle or an intelligent robot. The intelligent vehicle may be an autonomous driving vehicle that implements all functions as automatic control, or an auxiliary driving vehicle that implements some functions as automatic control, to provide driving assistance, or may be a common vehicle on which an intelligent terminal is deployed. The intelligent vehicle is referred to as a vehicle for short in the following.

In addition, embodiments of this application may be further executed by an apparatus connected to a mobile device. The apparatus may be implemented as a terminal device or deployed on a terminal device, for example, a smartphone, a tablet computer, a notebook computer, or a desktop computer, but is not limited thereto. Alternatively, the electronic device may be a server. The server may be an independent physical server, or may be a server cluster or a distributed system that includes a plurality of physical servers, or may be a cloud server that provides a cloud computing service.

For a problem in the conventional technology that driving experience is poor and traveling safety is affected due to poor convenience of adjusting a rear view mirror, a rear view mirror control solution is provided in embodiments of this application. When a user has an intention for controlling a vehicle to enter a traveling status or an intention for controlling the vehicle to switch the traveling status, the rear view mirror is intelligently adjusted, to avoid manual adjustment on the rear view mirror, and improve driving experience and traveling safety of the user.

Further, when it is determined that the user has the intention for entering or switching the traveling status, the rear view mirror is adjusted with reference to a human eye location, so that the rear view mirror is adjusted to a location (or an angle) suitable for the driver. This improves convenience and safety of using the vehicle.

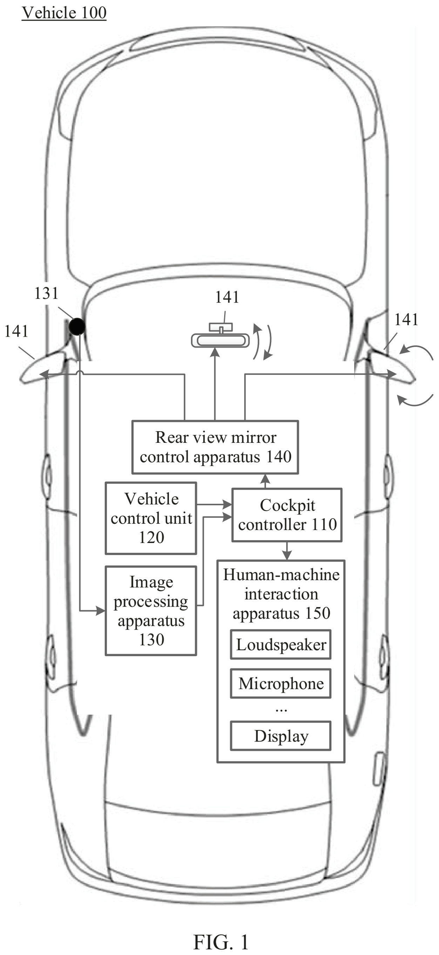

FIG. 1 is a diagram of a structure of a vehicle according to an embodiment of this application. With reference to FIG. 1, a cockpit controller 110 is deployed in the vehicle 100. The cockpit controller 110 is connected to a vehicle control unit 120, an image processor 130, a rear view mirror control apparatus 140, and a human-machine interaction apparatus 150.

The vehicle control unit 120 is configured to obtain gear information of the vehicle. The gear information may indicate a current gear of the vehicle. Gears set in the vehicle include, for example, at least one of a parking (parking, P) gear, a reverse (reverse, R) gear, a neutral (neutral, N) gear, and a drive (drive, D) gear. In some vehicles, a low (low, L) gear is further set. Further, the vehicle control unit 120 may send the gear information to the cockpit controller 110; or the vehicle control unit 120 may determine a traveling status of the vehicle, for example, traveling forward or traveling backward, based on the gear information, and send the traveling status of the vehicle to the cockpit controller 110.

In some embodiments, the vehicle control unit 120 may obtain vehicle speed information of the vehicle, and send the vehicle speed information to the cockpit controller 110.

The cockpit controller 110 may obtain the traveling status of the vehicle from the vehicle control unit 120; or the cockpit controller 110 may obtain the gear information of the vehicle from the vehicle control unit 120, and determine the current traveling status of the vehicle based on the obtained gear information.

In some embodiments, the cockpit controller 110 may further obtain the vehicle speed information from the vehicle control unit 120.

The image processor 130 may be connected to an image collection apparatus 131, to obtain an image collected by the image collection apparatus 131, and perform image processing based on the collected image, for example, perform image recognition based on a user image to obtain human eye location data. The image collection apparatus 131 may be implemented as a camera module. The image processor 130 may send, to the cockpit controller 110, data obtained through image recognition, or the cockpit controller 110 may obtain, from the image processor 130, data obtained through image recognition.

A deployment location of the image collection apparatus 131 is not limited in embodiments of this application, and a quantity of image collection apparatuses 131 deployed in the vehicle is not limited. For example, the image collection apparatus 131 may be deployed on a mechanical part in a vehicle cockpit and/or integrated on a screen in the vehicle. For example, the image collection apparatus 131 may be deployed near an A-pillar and/or a B-pillar, or in a front part of a top of the vehicle cockpit. For another example, the image collection apparatus 131 may be deployed on a control screen (at least one of an upper part, a left part, a right part, and the like of the control screen) in the vehicle.

The cockpit controller 110 may send a control instruction to the rear view mirror control apparatus 140, and the rear view mirror control apparatus 140 adjusts a location (or an angle) of a rear view mirror 141 based on the control instruction. Optionally, the rear view mirror control apparatus 140 may be implemented as a motor controller.

The rear view mirror 141 may include but is not limited to at least one of a left side rear view mirror (left rear view mirror for short), a right side rear view mirror (right rear view mirror for short), or an internal rear view mirror of the vehicle. The adjustment of the location (or the angle) of the rear view mirror 141 may include rotating any rear view mirror in any direction to change the location (or the angle) of the rear view mirror, for example, performing longitudinal adjustment and/or transverse adjustment on the rear view mirror, where the transverse adjustment and the longitudinal adjustment herein are for an up direction, a down direction, a left direction, and a right direction that a driver feels when driving the vehicle.

The human-machine interaction apparatus 150 may implement interaction with a user based on control of the cockpit controller 110. For example, the human-machine interaction apparatus 150 may include at least one of a loudspeaker, a microphone, and a display. The human-machine interaction apparatus 150 may display prompt information based on control of the cockpit controller 110.

It should be noted that the apparatuses shown in FIG. 1 are merely examples rather than limitation descriptions, and all or some of the apparatuses may be integrated into one physical entity, or may be independent of each other.

The following describes in detail the rear view mirror control method provided in embodiments of this application with reference to the accompanying drawings.

For ease of understanding and description, the following describes the method provided in embodiments of this application by using a vehicle control apparatus as an execution body. The control apparatus may be, for example, the cockpit controller 110 in FIG. 1. It is clear that this is not limited in this application. For example, embodiments of this application may be alternatively executed by a vehicle control unit, or any component having a processing capability in a vehicle.

The vehicle control apparatus may be implemented as a component in a vehicle, for example, a chip, a chip system, or another functional module that can invoke a program and execute the program. As long as the program that records code of the method provided in embodiments of this application can be run to implement the method provided in embodiments of this application, the vehicle control apparatus may be used as an execution body of the method provided in embodiments of this application.

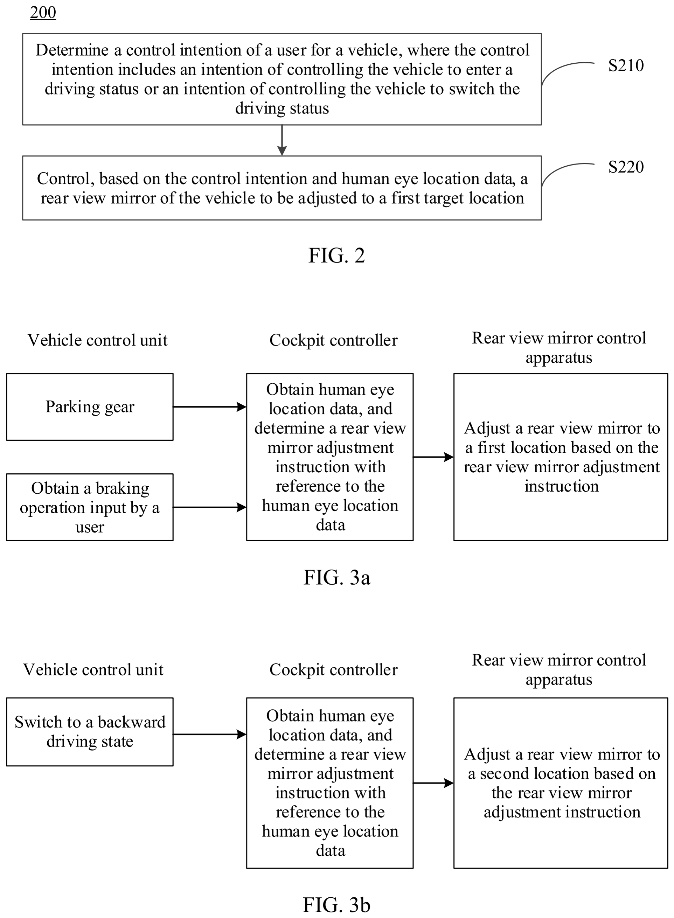

FIG. 2 is a schematic flowchart of a rear view mirror control method 200 according to an embodiment of this application. As shown in FIG. 2, the method 200 may include the following S210 and S220.

S210: Determine a control intention of a user for a vehicle, where the control intention includes an intention for controlling the vehicle to enter a traveling status or an intention for controlling the vehicle to switch the traveling status.

S220: Control, based on the control intention and human eye location data, a rear view mirror of the vehicle to be adjusted to a first target location.

As described above, the traveling status includes a forward traveling state or a backward traveling state.

The intention for controlling the vehicle to enter the traveling status may be an intention for switching the vehicle from a parking state to the traveling status. For example, the intention for controlling the vehicle to enter the traveling status is reflected by starting the vehicle or going to start the vehicle, or the intention for controlling the vehicle to enter the traveling status is reflected by controlling the vehicle to switch from the parking state (for example, the vehicle is in a parking gear or a neutral gear) to the traveling status.

It should be understood that, when the vehicle travels forward and backward, to provide the user with preferred angles of view behind the vehicle, locations (or angles) of the rear view mirror need to be different. Therefore, the control apparatus may adjust the rear view mirror based on the control intention. For example, when the vehicle enters the traveling status or switches the traveling status, the control apparatus controls the rear view mirror of the vehicle to be adjusted to a location corresponding to the traveling status.

For ease of description, a location (or an angle) of the rear view mirror present when a preferred angle of view is provided for the user is referred to as a location (or an angle) corresponding to the rear view mirror in the following. A location (or an angle) of the rear view mirror corresponding to the traveling status is a location (or an angle) of the rear view mirror that provides a preferred angle of view for the user in the traveling status. Similarly, a location (or an angle) of the rear view mirror corresponding to the control intention is a location (or an angle) of the rear view mirror that provides a preferred angle of view for the user in the control intention.

For example, when human eye locations are the same, different control intentions correspond to different locations of the rear view mirror. In other words, when the control intention is the intention for entering the traveling status, the control apparatus may control, based on the human eye location data, the rear view mirror of the vehicle to be adjusted to a first location; or when the control intention is the intention for switching the traveling status, the control apparatus may control, based on the human eye location data, the rear view mirror of the vehicle to be adjusted to a second location. Generally, when human eye locations are the same, the first location and the second location are different first target locations.

For example, in a same control intention, different traveling states may correspond to different locations (or angles) of the rear view mirror. For example, when the control intention is the intention for switching the traveling status, and a gear of the vehicle is switched from a drive gear to a reverse gear, the control apparatus may control, based on the human eye location data, the rear view mirror of the vehicle to be adjusted to a third location. For another example, when the control intention is the intention for switching the traveling status, and a gear of the vehicle is switched from a reverse gear to a drive gear, the control apparatus may control, based on the human eye location data, the rear view mirror of the vehicle to be adjusted to a fourth location. Both the third location and the fourth location may be specific implementations of the second location.

For example, different traveling states may correspond to different locations (or angles) of the rear view mirror. For example, after the user starts the vehicle, that is, when the vehicle enters the forward traveling state, the rear view mirror needs to be adjusted to a location suitable for observing a rear vehicle, to provide a reference for overtaking or switching lanes. For another example, when the user switches from the drive gear to the reverse gear, the rear view mirror needs to be adjusted to a location that facilitates observation of a road condition and an obstacle on a road surface, to ensure safety. Different control intentions may correspond to different locations (or angles) of the rear view mirror. In other words, a same traveling state in different control intentions may correspond to different locations (or angles) of the rear view mirror. For example, a location of the rear view mirror that can provide a preferred angle of view when the vehicle enters the forward traveling state is different from a location of the rear view mirror that can provide a preferred angle of view when the vehicle switches from the backward traveling state to the forward traveling state.

Based on this, in some embodiments, the control apparatus may determine, in response to a braking operation (for example, step on a brake) input by the user when the vehicle is in the parking gear, that the control intention of the user for the vehicle is the intention for entering the traveling status. With reference to FIG. 3a, the cockpit controller obtains the gear information of the vehicle from the vehicle control unit, determines that the vehicle is in the parking gear, and detects that the user performs the braking operation. For example, the vehicle control unit detects that the brake is triggered, and sends a braking instruction to the cockpit controller. For another example, the cockpit controller determines, based on the user image, that the user is sitting on a seat and stepping on the brake, so that the cockpit controller obtains the human eye location data, and determines a rear view mirror adjustment instruction with reference to the human eye location data, where the rear view mirror adjustment instruction instructs the rear view mirror control apparatus to control the rear view mirror to be adjusted to the first location. Further, the rear view mirror control apparatus adjusts the rear view mirror based on the rear view mirror adjustment instruction.

Optionally, before the rear view mirror is controlled to be adjusted to the first target location, a rear view mirror adjustment function may be first activated. For example, the vehicle control unit may enable the rear view mirror adjustment function in response to an operation of the user; or the vehicle control unit may enable the rear view mirror adjustment function in response to a trigger event, for example, enable the rear view mirror adjustment function after determining, based on an image collected by the image collection apparatus, that the user enters the cockpit; or the vehicle control unit may enable the rear view mirror adjustment function by default. The cockpit controller can control the rear view mirror to achieve automatic adjustment when the rear view mirror adjustment function is activated by the vehicle control unit.

Optionally, when a human-eye positioning function is activated, the control apparatus may control, based on the human eye location data, the rear view mirror of the vehicle to be adjusted to the first target location. For example, the cockpit controller may enable the human eye positioning function when the rear view mirror adjustment function is activated.

In addition, the control apparatus may further determine, in response to another user operation, that the control intention of the user for the vehicle is the intention for entering the traveling status. For example, the control apparatus determines, in response to triggering of a start button of the vehicle by the user, that the control intention of the user for the vehicle is the intention for entering the traveling status. For another example, when the control apparatus switches the gear of the vehicle from the parking gear (or the neutral gear) to the drive gear (or the reverse gear) in response to operating the gear of the vehicle by the user, the control apparatus determines that the control intention of the user for the vehicle is the intention for entering the traveling status.

The intention for controlling the vehicle to switch the traveling status may include: switching the vehicle from the reverse gear to the drive gear, or switching from the drive gear to the reverse gear, to reflect the intention for switching the traveling status. Based on this, in some embodiments, the control apparatus may determine, in response to a gear switching operation input by the user, that the control intention of the user for the vehicle is the intention for switching the traveling status. The gear switching operation is used to switch the vehicle from a first gear to a second gear, where the second gear is the reverse gear or the drive gear, and the first gear is different from the second gear. For example, the second gear is the reverse gear, and the first gear is the drive gear. For another example, the second gear is the drive gear, and the first gear is the reverse gear.

With reference to FIG. 3b, in response to the gear switching operation performed by the user on the gear of the vehicle, the vehicle control unit may switch the vehicle from another traveling state (for example, the forward traveling state) to the backward traveling state. The cockpit controller obtains the gear information of the vehicle from the vehicle control unit, and when determining that the vehicle is switched from the another traveling state (for example, the forward traveling state) to the backward traveling state, the cockpit controller obtains the human eye location data, and determines the rear view mirror adjustment instruction with reference to the human eye location data, where the rear view mirror adjustment instruction instructs the rear view mirror control apparatus to control the rear view mirror to be adjusted to the second location. Further, the rear view mirror control apparatus adjusts the rear view mirror based on the rear view mirror adjustment instruction.

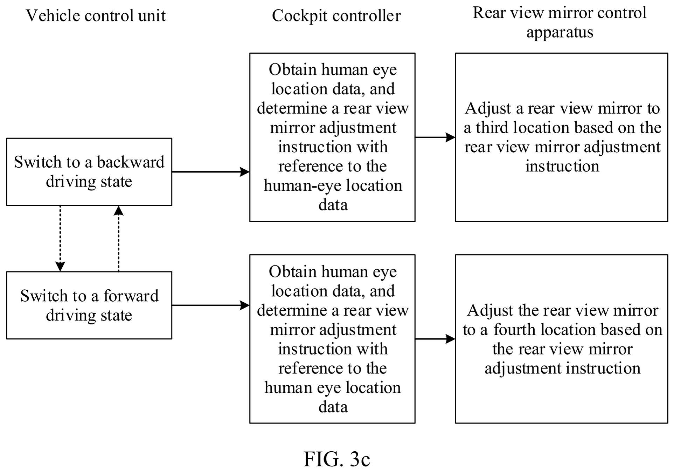

With reference to FIG. 3c, when the cockpit controller obtains the gear information of the vehicle from the vehicle control unit, and when determining that the vehicle is switched from the forward traveling state to the backward traveling state, controls, with reference to the human eye location data, the rear view mirror to be adjusted to the third location. For details, refer to an implementation in FIG. 3b. Further, in response to the gear switching operation performed by the user on the vehicle, the vehicle control unit may switch the vehicle from the backward traveling state to the forward traveling state. When the cockpit controller obtains the gear information of the vehicle from the vehicle control unit and determines that the vehicle is switched from the backward traveling state to the forward traveling state, the cockpit controller obtains the human eye location data, and determines the rear view mirror adjustment instruction with reference to the human eye location data, where the rear view mirror adjustment instruction instructs the rear view mirror control apparatus to control the rear view mirror to be adjusted to the fourth location. Further, the rear view mirror control apparatus adjusts the rear view mirror based on the rear view mirror adjustment instruction. The vehicle may switch between the forward traveling state and the backward traveling state for one or more times, and the rear view mirror may control the rear view mirror to be adjusted to a corresponding location when at least one of the traveling statuses is switched.

In the foregoing embodiment, the control apparatus may control, based on the control intention, the rear view mirror to be adjusted to the first target location. However, to further provide a preferred angle of view for the driver after the rear view mirror is adjusted, as described above, the control apparatus may further adjust the rear view mirror with reference to the human eye location data. The human eye location data may be a location of an eye of the driver in a three-dimensional space. The three-dimensional space may be a three-dimensional space in a geodetic coordinate system, or may be a three-dimensional space in a cockpit coordinate system. This is not limited in this application. For example, different drivers have different heights and different eye locations. For another example, a change in a sitting posture of the driver during driving causes a change in an eye location. Therefore, the rear view mirror is adjusted based on the control intention and the human eye location data. In other words, the rear view mirror is adjusted to the first target location, so that the rear view mirror can be adjusted to a location matching the eye location of the driver, thereby providing a preferred angle of view for the driver.

The first target location may be a location that has a displacement from the location of the rear view mirror determined based on the control intention.

For example, the control apparatus may obtain the human eye location data of the user in advance. The human eye location data may be collected and stored in advance. For example, the image processor (for example, the image processor 130 in FIG. 1) performs image recognition on the user image collected by the image collection apparatus (for example, the image collection apparatus 131 in FIG. 1) to obtain the human eye location data, and stores the human eye location data, so that the control apparatus obtains the corresponding human eye location data in an adjustment process of the rear view mirror. Alternatively, the human eye location data may be determined by the control apparatus in real time. For example, the control apparatus obtains the user image collected by the image collection apparatus (for example, the image collection apparatus 131 in FIG. 1), and performs image recognition on the user image to obtain the human eye location data. It should be understood that the image processor may perform image processing based on an instruction of the control apparatus. Therefore, regardless of whether the human eye location data is directly obtained by the control apparatus by recognizing the user image, or is sent by the image processor to the control apparatus by recognizing the user image, the human eye location data may be understood as the human eye location data obtained by the control apparatus.

The user image may be an image that is in a cockpit and that is collected by any image collection apparatus deployed in the vehicle, and the image presents at least a user (for example, the driver) of the vehicle.

In this embodiment of this application, when the user has the intention for controlling the vehicle to enter the traveling status or the intention for controlling the vehicle to switch the traveling status, the rear view mirror is automatically adjusted, to avoid manual adjustment of the rear view mirror, to improve driving experience and traveling safety of the user especially when the traveling status is frequently entered or the traveling status is frequently switched. Further, the rear view mirror is adjusted to the first target location with reference to the human eye location, so that the location (or the angle) of the rear view mirror can match the user, thereby providing a preferred angle of view for the user.

The following describes an example of a user image collection occasion for the two control intentions.

Example 1: When the control intention is the intention for controlling the vehicle to enter the traveling status, the control apparatus may control the image collection apparatus to start to collect the user image when the user takes the vehicle. Further, the control apparatus determines the human eye location data based on the user image.

Optionally, the control apparatus may monitor the cockpit of the vehicle via the image collection apparatus, and start to collect the user image when the user enters the cockpit of the vehicle; or the control apparatus may monitor, via a door sensing apparatus, that the user opens a door of the vehicle and enters the cockpit of the vehicle, and start to collect the user image; or the control apparatus may determine, via a seat sensor (for example, a gravity sensor mounted with a seat), that the user is in the cockpit of the vehicle, and start to collect the user image.

In the foregoing example 1, the control apparatus may continuously collect the user image until the user leaves the cockpit of the vehicle, or stop after the traveling status is entered and rear view mirror adjustment is completed, or stop after the user completes one driving cycle. The driving cycle refers to a process from starting the vehicle to shutting down the vehicle, or from powering on the vehicle to powering off the vehicle.

Example 2: The control intention is the intention for controlling the vehicle to switch the traveling status. As described above, the switching the traveling status of the vehicle may mean that the vehicle switches from the first gear to the second gear. In this case, the control apparatus may control the image collection apparatus to collect the user image when the vehicle travels in the first gear or the second gear. In other words, the control apparatus may control the image collection apparatus to collect the user image before the vehicle switches from the first gear to the second gear (for example, at a last moment of traveling in the first gear), or the control apparatus may control the image collection apparatus to collect the user image in a process in which the vehicle switches from the first gear to the second gear, or the control apparatus may control the image collection apparatus to collect the user image after the vehicle switches to the second gear (for example, at an initial moment of switching to the second gear). Further, the control apparatus determines the human eye location data based on the user image.

In some embodiments, a user image collection process in the foregoing Example 2 may be a part of an image collection process in the foregoing Example 1. For example, the control apparatus continuously collects the user image after the user enters the vehicle cockpit, and updates, in real time, the human eye location data determined based on the user image.

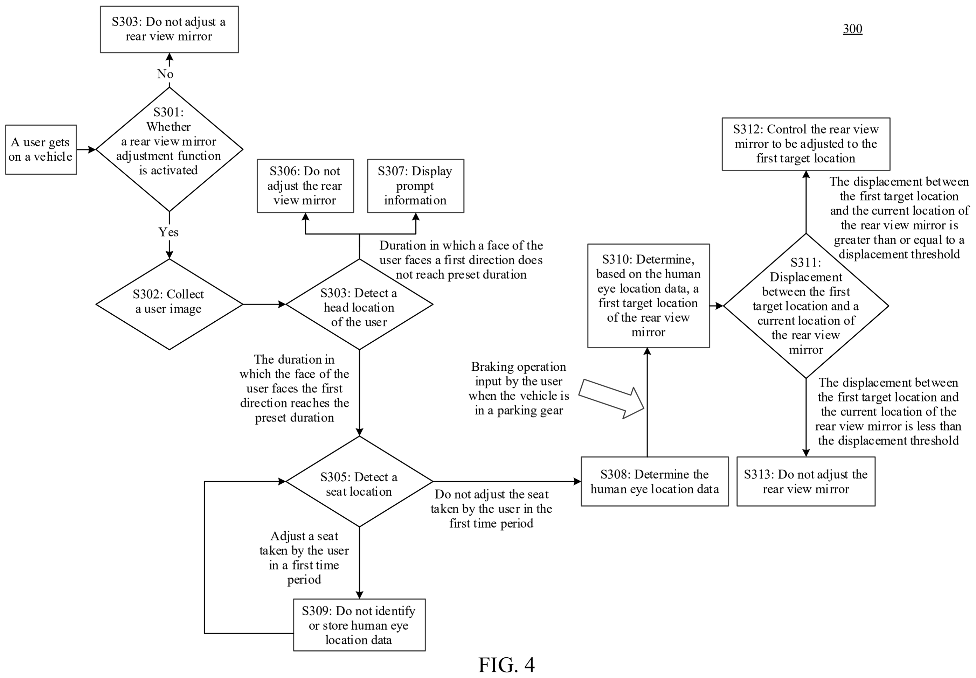

FIG. 4 is a schematic flowchart of another rear view mirror control method 300 according to an embodiment of this application. In the method 300, a user image collection occasion in the control intention of the foregoing Example 1 is used as an example to describe an example of implementing rear view mirror adjustment. The method 300 may include some or all of the following steps.

S301: After a user gets on a vehicle, a control apparatus determines whether a rear view mirror adjustment function is activated. If the rear view mirror adjustment function is activated, S303 is performed; or if the rear view mirror adjustment function is not activated, no rear view mirror adjustment is performed, as shown in S304.

S302: The control apparatus collects an image in a cockpit via an image collection apparatus, to obtain a user image.

S303: The control apparatus detects a head pose of the user. For example, the control apparatus recognizes the user image to obtain head location pose information of the user, and determines, based on the head location pose information of the user, whether duration in which a face of the user faces a first direction reaches preset duration. The first direction may be a front direction, a left front direction, a right front direction, a left direction, a right direction, or the like of the user. For example rather than limitation, when the vehicle is started (or enters a traveling status), the first direction may be the right front direction of the user. When the vehicle is switched from a forward traveling state to a backward traveling state, the first direction may be the left direction, the front direction, the left front direction, the right direction, the right front direction or the like of the user.

When the duration in which the face of the user faces the first direction reaches the preset duration, accurate human eye location data can be obtained based on the user image. Therefore, when the duration in which the face of the user faces the first direction reaches the preset duration, the control apparatus may determine the human eye location data based on the user image, and store the human eye location data, or the control apparatus may perform the following S305. When the duration in which the face of the user faces the first direction does not reach the preset duration, no rear view mirror adjustment is performed, that is, the human eye location data fails to be obtained, as shown in S306. That the preset duration is reached may mean that the duration is greater than or equal to the preset duration, and that the preset duration is not reached may mean that the duration is less than the preset duration. The preset duration may be any value, for example, 2 seconds (s), 2.5s, or 5s.

Further, when the control apparatus fails to obtain the human eye location data, the control apparatus may display prompt information, as shown in S307. The prompt information indicates that the duration in which the user faces the first direction reaches the preset duration. For example, the control apparatus may play the prompt information through the loudspeaker, or the control apparatus may display the prompt information through the display. The prompt information may be, for example, "Please look ahead and hold for 2s".

S305: The control apparatus determines whether a seat location changes in a first time period. The first time period may be collection duration of the user image, or collection duration of the user image includes the first time period. For example, the first time period may be a time period in which the user looks in the first direction in a process of collecting the user image, and duration of the first time period may be greater than or equal to the preset duration. When the seat changes, accurate human eye location data cannot be determined based on the user image. In other words, valid human eye location data cannot be obtained. Therefore, to obtain accurate human eye location data, the control apparatus may perform S308 when the seat taken by the user is not adjusted in the first time period, and perform S309 when the seat taken by the user is adjusted in the first time period.

S308: The control apparatus determines the human eye location data based on the user image. In some embodiments, the control apparatus may store the human eye location data as the valid human eye location data.

S309: The control apparatus may not recognize the user image to obtain the human eye location data, or the control apparatus does not store the human eye location data. Further, the control apparatus may display the prompt information through the human-machine interaction apparatus, where the prompt information indicates that adjustment of the seat taken by the user is stopped, or indicates that the duration in which the user faces the first direction after the adjustment of the seat reaches the preset duration. For example, the control apparatus may play the prompt information through the loudspeaker, or the control apparatus may display the prompt information through the display. The prompt information may be, for example, "Please look ahead after seat adjustment is completed" or "Do not adjust the seat, and look ahead and hold for 2s".

The control apparatus may continuously detect the seat location, and when a change of the seat location stops, recognize the user image, to obtain the valid human eye location data, and may store the human eye location data.

S310: In response to a braking operation input by the user when the vehicle is in a parking gear, the control apparatus performs recognition based on the user image collected in S302 to obtain the human eye location data, or obtains the stored human eye location data, and determines a first target location of a rear view mirror based on the human eye location data.

S311: The control apparatus determines a displacement between the first target location and a current location of the rear view mirror, where the displacement may be an angle displacement.

When the displacement between the first target location and the current location of the rear view mirror is greater than or equal to a displacement threshold, the control apparatus controls the rear view mirror to be adjusted to the first target location, as shown in S312. When the displacement between the first target location and the current location of the rear view mirror is less than the displacement threshold, the rear view mirror is not adjusted, as shown in S313. It should be understood that, when the displacement between the first target location and the current location of the rear view mirror is large, the rear view mirror is adjusted, so that high overheads of the control apparatus due to frequent adjustment of the rear view mirror can be avoided.

It should be noted that, when the control intention is the intention for switching the traveling status, a process in which the control apparatus determines the human eye location data is similar to at least some processes in S301 to S309 in FIG. 4, and a difference lies only in user image collection occasions. For brevity, details are not described again.

In some scenarios, a plurality of times of gear switching may be performed in a short time, as shown in FIG. 3c. For example, when a vehicle performs reverse parking, a gear is switched a plurality of times to adjust a vehicle body direction, or a driver quickly performs a plurality of times of gear switching due to a wrong gear control. In this case, the rear view mirror does not need to be adjusted. For example, when the vehicle performs reverse parking, although the vehicle switches from the backward traveling state to the forward traveling state, the rear view mirror may remain at a location corresponding to the backward traveling state, and does not need to be frequently switched. Therefore, in this embodiment, the control apparatus may determine whether a vehicle speed of the vehicle is greater than or equal to a speed threshold, and when the vehicle speed of the vehicle is greater than or equal to the speed threshold, control, based on the control intention and the human eye location data, the rear view mirror of the vehicle to be adjusted to the first target location.

To further improve vehicle use convenience and traveling safety, in this embodiment of this application, the control apparatus may adjust the rear view mirror in a vehicle use process in response to an instruction that is input by the user and that is used to adjust the rear view mirror, or adjust the rear view mirror in a process of automatically adjusting the rear view mirror under the foregoing trigger condition (for example, entering the traveling status or switching the traveling status), and adjust the rear view mirror to a second target location.

For example, the control apparatus may obtain a first adjustment instruction input by the user, and control, based on the first adjustment instruction input by the user and the human eye location data, the rear view mirror to be adjusted to the second target location. The first adjustment instruction may be an instruction input by the user through audio data, that is, a voice control instruction, or the first adjustment instruction may be an instruction input by the user by operating a physical button. This is not limited in this application.

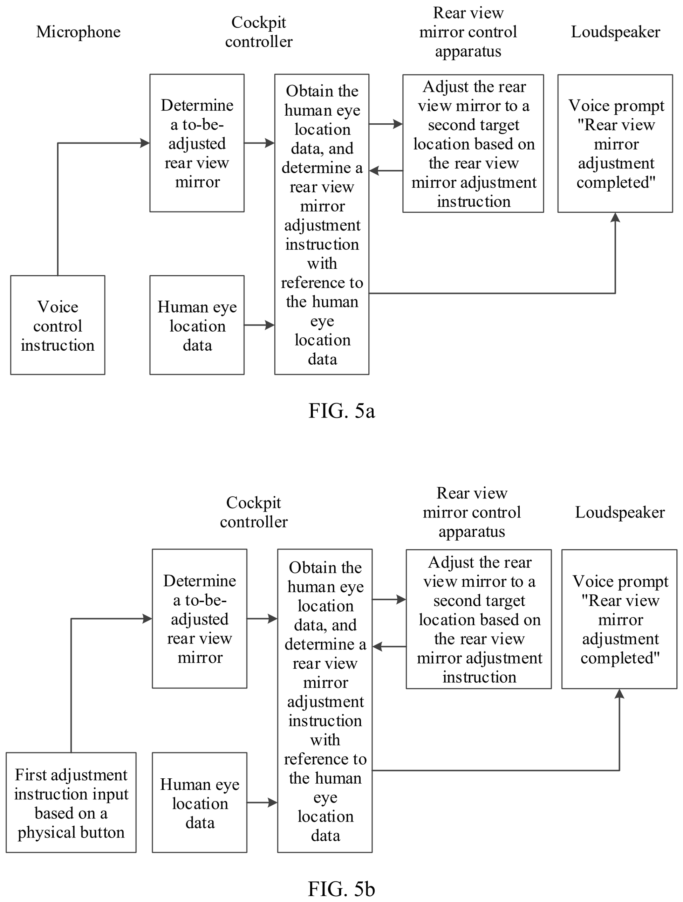

Refer to FIG. 5a. The cockpit controller receives the voice control instruction through the microphone. The voice control instruction may be generated by the microphone by performing sound pickup conversion after collecting audio data input by the user, for example, "Adjust a rear view mirror" or "Adjust a left/right rear view mirror". The cockpit controller may determine a to-be-adjusted rear view mirror based on the voice control instruction, or the cockpit controller may recognize a to-be-adjusted rear view mirror based on the head pose information of the user. Further, the cockpit controller obtains the human eye location data, and determines a rear view mirror adjustment instruction with reference to the human eye location data, where the rear view mirror adjustment instruction is used to adjust the rear view mirror to the second target location, and the rear view mirror control apparatus adjusts the rear view mirror based on the rear view mirror adjustment instruction. For example, the cockpit controller may display prompt information after the rear view mirror is adjusted to the second target location. For example, the cockpit controller obtains a rear view mirror adjustment result from the rear view mirror control apparatus, to determine that the rear view mirror is adjusted to the second target location. The prompt information indicates that the rear view mirror adjustment is completed. For example, the prompt information is played through the loudspeaker or displayed through the display.

For example, that the control apparatus determines a to-be-adjusted rear view mirror based on the head pose information of the user may include: The control apparatus determines, based on the head pose information of the user, a direction that a face of the user faces, or a direction of a line of sight of the user, and determines the to-be-adjusted rear view mirror based on the direction to which the face of the user faces or the direction of the line of sight of the user. For example, when the user looks at a left rear view mirror, the to-be-adjusted rear view mirror is the left rear view mirror; or when the user looks at a right rear view mirror, the to-be-adjusted rear view mirror is the right rear view mirror.

Refer to FIG. 5b. The user looks at a to-be-adjusted rear view mirror, and taps an angle adjustment button. The cockpit controller determines the to-be-adjusted rear view mirror in response to an operation of the user. Further, the cockpit controller obtains the human eye location data, and determines the rear view mirror adjustment instruction with reference to the human eye location data, where the rear view mirror adjustment instruction is used to adjust the rear view mirror to the second target location, and the rear view mirror control apparatus adjusts the rear view mirror based on the rear view mirror adjustment instruction. Similar to FIG. 5b, the cockpit controller may display prompt information after the rear view mirror is adjusted to the second target location, to prompt that the rear view mirror adjustment is completed. For brevity, details are not described again.

Based on the foregoing embodiments in 5a and FIG. 5b, to further fine-tune the rear view mirror, so that adjustment of the rear view mirror meets a use requirement of the user. In this embodiment of this application, the control apparatus obtains, within a preset time after obtaining the first adjustment instruction, a second adjustment instruction input by the user, where the second adjustment instruction instructs to adjust the rear view mirror of the vehicle in a target direction, and the target direction may be any direction in a three-dimensional space. Further, the control apparatus controls, based on the second adjustment instruction, the rear view mirror to be adjusted from the second target location to a third target location in the target direction. A displacement between the third target location and the second target location may be a preset displacement.

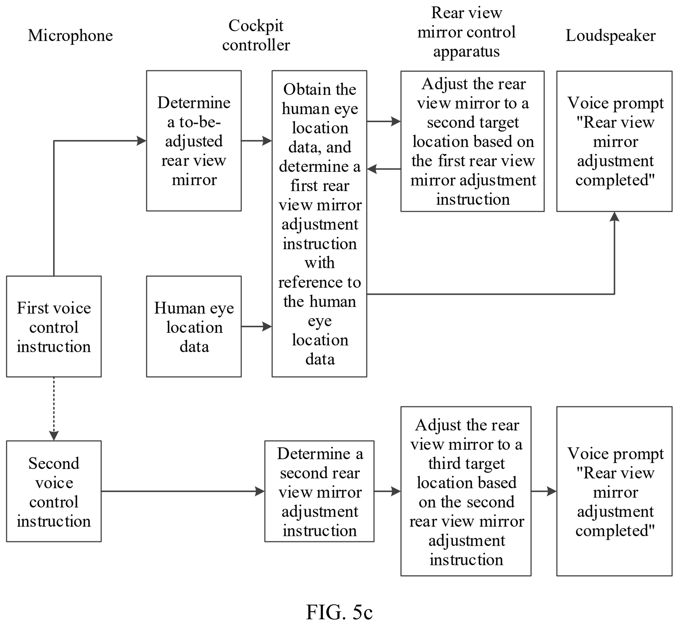

Refer to FIG. 5c. An example in which both the first adjustment instruction and the second adjustment instruction are instructions input by the user through audio data is used. In other words, the first adjustment instruction is a first voice control instruction, the second adjustment instruction is a second voice control instruction, and an interval between audio data collection time of the first voice control instruction and audio data collection time of the second voice control instruction may be less than or equal to a preset time interval. A process of generating the first rear view mirror adjustment instruction based on the first voice control instruction to control the rear view mirror to be adjusted to the second target location is similar to the example shown in FIG. 5a, and details are not described herein again. The cockpit controller collects, through the microphone, audio data input by the user, for example, "Move upward/downward/leftward/rightward/forward/backward", and the microphone converts the audio data into the second voice control instruction through sound pickup conversion. The cockpit controller determines the second rear view mirror adjustment instruction based on the second voice control instruction, where the second rear view mirror adjustment instruction instructs the rear view mirror control apparatus to control, in an upward/downward/leftward/rightward/forward/backward direction, the rear view mirror to be adjusted from the second target location to the third target location, and the rear view mirror control apparatus adjusts the rear view mirror based on the second rear view mirror adjustment instruction. Similar to FIG. 5a and FIG. 5b, the cockpit controller may display prompt information after the rear view mirror is adjusted to the third target location, to prompt that the rear view mirror adjustment is completed. For brevity, details are not described again.

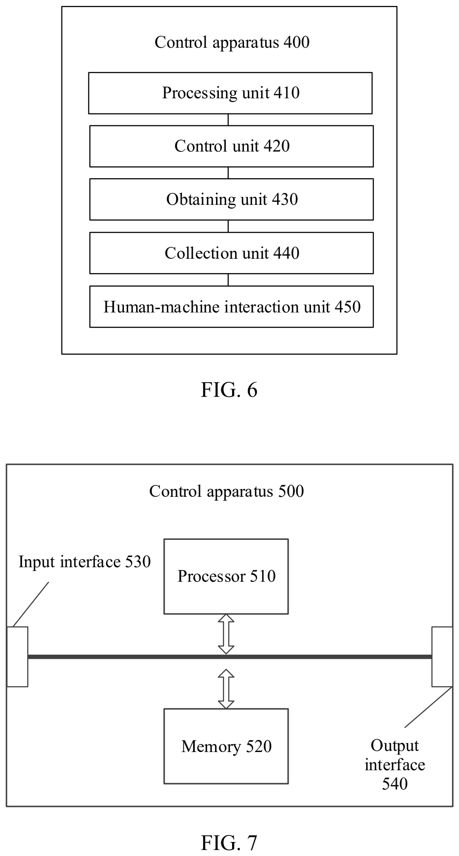

FIG. 6 is a block diagram of a vehicle control apparatus according to an embodiment of this application. As shown in FIG. 6, the control apparatus 400 includes some or all of a processing unit 410, a control unit 420, an obtaining unit 430, a collection unit 440, and a human-machine interaction unit 450.

The processing unit 410 may be configured to determine a control intention of a user for a vehicle, where the control intention includes an intention for controlling the vehicle to enter a traveling status or an intention for controlling the vehicle to switch the traveling status. The control unit 420 may be configured to control, based on the control intention and human eye location data, a rear view mirror of the vehicle to be adjusted to a first target location.

In a possible implementation, the processing unit 410 is specifically configured to determine, in response to a braking operation input by the user when the vehicle is in a parking gear, that the control intention of the user for the vehicle is the intention for entering the traveling status.

In a possible implementation, the processing unit 410 is specifically configured to determine, in response to a gear switching operation input by the user, that the control intention of the user for the vehicle is the intention for switching the traveling status, where the gear switching operation is used to switch the vehicle from a first gear to a second gear, the second gear is a reverse gear or a drive gear, and the first gear is different from the second gear.

In a possible implementation, the control unit is specifically configured to: when the control intention is the intention for entering the traveling status, control, based on the human eye location data, the rear view mirror of the vehicle to be adjusted to a first location; or when the control intention is the intention for switching the traveling status, control, based on the human eye location data, the rear view mirror of the vehicle to be adjusted to a second location.

In a possible implementation, the obtaining unit 430 may be configured to obtain the human eye location data of the user, where the human eye location data is determined based on a collected user image.

In a possible implementation, the control intention is the intention for controlling the vehicle to enter the traveling status, and the collection unit 440 may be configured to collect the user image in response to the user taking the vehicle.

In a possible implementation, the control intention is the intention for controlling the vehicle to switch the traveling status, and the collection unit 440 may be configured to collect the user image when the vehicle travels in a first gear or a second gear, where the first gear is a gear of the vehicle before switching of the traveling status.

In a possible implementation, the processing unit 410 is further configured to: recognize the user image to obtain head pose information of the user; determine, based on the head pose information, whether duration in which a face of the user faces a first direction reaches preset duration; and determine the human eye location data based on the user image when the duration in which the face of the user faces the first direction reaches the preset duration.

In a possible implementation, the control intention is the intention for controlling the vehicle to enter the traveling status, and the first direction is a front direction of the user.

In a possible implementation, the processing unit 410 is further configured to: determine the human eye location data based on the user image when a seat taken by the user is not adjusted in a first time period, where the first time period is collection duration of the user image.

In a possible implementation, the human-machine interaction unit 450 may be configured to: if the human eye location data fails to be obtained, display prompt information, where the prompt information indicates that the duration in which the face of the user faces the first direction reaches the preset duration, and/or indicates that adjustment of the seat taken by the user is stopped.

In a possible implementation, the control intention is the intention for controlling the vehicle to switch from a backward traveling state to a forward traveling state; and the control unit 420 is specifically configured to: determine whether a vehicle speed of the vehicle in the forward traveling state is greater than or equal to a speed threshold; and when the vehicle speed of the vehicle is greater than or equal to the speed threshold, control, based on the control intention and the human eye location data, the rear view mirror of the vehicle to be adjusted to the first target location.

In a possible implementation, the control unit 420 is specifically configured to: determine a displacement between the first target location and a current location of the rear view mirror based on the control intention and the human eye location data; and when the displacement is greater than or equal to a displacement threshold, control the rear view mirror of the vehicle to be adjusted to the first target location.

In a possible implementation, the control unit 420 is specifically configured to: obtain a first adjustment instruction input by the user, where the first adjustment instruction instructs to adjust the rear view mirror of the vehicle; and control, based on the first adjustment instruction and the human eye location data, the rear view mirror to be adjusted to a second target location.

In a possible implementation, the control unit 420 is specifically configured to: obtain, within a preset time after obtaining the first adjustment instruction, a second adjustment instruction input by the user, where the second adjustment instruction instructs to adjust the rear view mirror of the vehicle in a target direction; and control, based on the second adjustment instruction, the rear view mirror to be adjusted from the second target location to a third target location in the target direction.

In a possible implementation, the first adjustment instruction and/or the second adjustment instruction include/includes a voice control instruction of the user or an instruction input by operating a physical button.

In a possible implementation, the processing unit 410 is further configured to determine a to-be-adjusted rear view mirror based on the human eye location data.

A specific process in which each module performs the foregoing corresponding steps is described in detail in the foregoing method embodiments. For brevity, details are not described herein again.

Division into the units/modules in the apparatus is merely logical function division. During actual implementation, all or some of the units/modules may be integrated into one physical entity or may be physically separated.

FIG. 7 is a block diagram of another vehicle control apparatus 500 according to an embodiment of this application. The apparatus 500 may include a processor 510 and a memory 520. The processor 510 and the memory 520 communicate with each other through an internal connection path. The memory 520 is configured to store instructions. The processor 510 is configured to execute the instructions stored in the memory 520.

Optionally, the memory 520 may include a read-only memory and a random access memory, and provide instructions and data to the processor 510. The memory 520 may be an independent device, or may be integrated into the processor 510.

In some embodiments, the apparatus 500 may further include an input interface 530. The processor 510 may control the input interface 530 to communicate with another device or chip, and specifically, may obtain information or data sent by the another device or chip.

In some embodiments, the apparatus 500 may further include an output interface 540. The processor 510 may control the output interface 540 to communicate with another device or chip, and specifically, may output information or data may be output to the another device or chip.

In some embodiments, the apparatus 500 may implement corresponding procedures of the methods in embodiments of this application. For brevity, details are not described herein again.

It should be understood that the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

An embodiment of this application further provides a computer-readable storage medium, configured to store a computer program. In some embodiments, the computer program enables a computer to perform corresponding procedures of the methods in embodiments of this application. For brevity, details are not described herein again.

An embodiment of this application further provides a computer program product, including computer program instructions. In some embodiments, the computer program instructions enable a computer to perform corresponding procedures of the methods in embodiments of this application. For brevity, details are not described herein again.

An embodiment of this application further provides a computer program. In some embodiments, when the computer program runs on a computer, the computer is enabled to perform corresponding procedures of the methods in embodiments of this application. For brevity, details are not described herein again.

An embodiment of this application further provides a vehicle. In some embodiments, the intelligent vehicle includes the vehicle control apparatus or the control chip in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A rear view mirror control method, comprising:
determining a control intention of a user for a vehicle, wherein the control intention comprises an intention for controlling the vehicle to enter a traveling status or an intention for controlling the vehicle to switch the traveling status; and
controlling, based on the control intention and human eye location data, a rear view mirror of the vehicle to be adjusted to a first target location.

2. The method according to claim 1, wherein the determining a control intention of a user for a vehicle comprises:
determining, in response to a braking operation input by the user when the vehicle is in a parking gear, that the control intention of the user for the vehicle is the intention for entering the traveling status.

3. The method according to claim 1, wherein the determining a control intention of a user for a vehicle comprises:
determining, in response to a gear switching operation input by the user, that the control intention of the user for the vehicle is the intention for switching the traveling status, wherein the gear switching operation is used to switch the vehicle from a first gear to a second gear, the second gear is a reverse gear or a drive gear, and the first gear is different from the second gear.

4. The method according to any one of claims 1 to 3, wherein the controlling, based on the control intention and human eye location data, a rear view mirror of the vehicle to be adjusted to a first target location comprises:
when the control intention is the intention for entering the traveling status, controlling, based on the human eye location data, the rear view mirror of the vehicle to be adjusted to a first location; or
when the control intention is the intention for switching the traveling status, controlling, based on the human eye location data, the rear view mirror of the vehicle to be adjusted to a second location.

5. The method according to any one of claims 1 to 4, further comprising:
obtaining the human eye location data of the user, wherein the human eye location data is determined based on a collected user image.

6. The method according to claim 5, wherein the control intention is the intention for controlling the vehicle to enter the traveling status, and further comprises:
collecting the user image in response to the user taking the vehicle.

7. The method according to claim 5, wherein the control intention is the intention for controlling the vehicle to switch the traveling status, and further comprises:
collecting the user image when the vehicle travels in the first gear or the second gear, wherein the first gear is a gear of the vehicle before switching of the traveling status, and the second gear is a gear of the vehicle after switching of the traveling status.

8. The method according to any one of claims 5 to 7, wherein that the human eye location data is determined by a collected user image comprises:
recognizing the user image to obtain head pose information of the user;
determining, based on the head pose information, whether duration in which a face of the user faces a first direction reaches preset duration; and
determining the human eye location data based on the user image when the duration in which the face of the user faces the first direction reaches the preset duration.

9. The method according to claim 8, wherein when the control intention is the intention for entering the traveling status, the first direction is a front direction of the user.

10. The method according to any one of claims 5 to 9, further comprising:
determining the human eye location data based on the user image when a seat taken by the user is not adjusted in a first time period, wherein the first time period is collection duration of the user image.

11. The method according to any one of claims 5 to 10, further comprising:
if the human eye location data fails to be obtained, displaying prompt information, wherein
the prompt information indicates that the duration in which the face of the user faces the first direction needs to reach the preset duration, and/or indicates that adjustment of the seat taken by the user is stopped.

12. The method according to any one of claims 1 to 11, wherein the control intention is an intention for controlling the vehicle to switch from a backward traveling state to a forward traveling state; and
the controlling, based on the control intention and human eye location data, a rear view mirror of the vehicle to be adjusted to a first target location comprises:
determining whether a vehicle speed of the vehicle in the forward traveling state is greater than or equal to a speed threshold; and
when the vehicle speed of the vehicle is greater than or equal to the speed threshold, controlling, based on the control intention and the human eye location data, the rear view mirror of the vehicle to be adjusted to the first target location.

13. The method according to any one of claims 1 to 12, wherein the controlling, based on the control intention and human eye location data, a rear view mirror of the vehicle to be adjusted to a first target location comprises:
determining a displacement between the first target location and a current location of the rear view mirror based on the control intention and the human eye location data; and
when the displacement is greater than or equal to a displacement threshold, controlling the rear view mirror of the vehicle to be adjusted to the first target location.

14. The method according to any one of claims 1 to 13, further comprising:
obtaining a first adjustment instruction input by the user, wherein the first adjustment instruction instructs to adjust the rear view mirror of the vehicle; and
controlling, based on the first adjustment instruction and the human eye location data, the rear view mirror to be adjusted to a second target location.

15. The method according to claim 14, further comprising:
obtaining, within a preset time after obtaining the first adjustment instruction, a second adjustment instruction input by the user, wherein the second adjustment instruction instructs to adjust the rear view mirror of the vehicle in a target direction; and
controlling, based on the second adjustment instruction, the rear view mirror to be adjusted from the second target location to a third target location in the target direction.

16. The method according to claim 14 or 15, wherein the first adjustment instruction and/or the second adjustment instruction comprise/comprises a voice control instruction of the user or an instruction input by the user by operating a physical button.

17. The method according to any one of claims 1 to 16, further comprising:
determining a to-be-adjusted rear view mirror based on the head pose information of the user.

18. A control apparatus, comprising:
a processing unit, configured to determine a control intention of a user for a vehicle, wherein the control intention comprises an intention for controlling the vehicle to enter a traveling status or an intention for controlling the vehicle to switch the traveling status; and
a control unit, configured to control, based on the control intention and human eye location data, a rear view mirror of the vehicle to be adjusted to a first target location.

19. The apparatus according to claim 18, wherein the processing unit is specifically configured to:
determine, in response to a braking operation input by the user when the vehicle is in a parking gear, that the control intention of the user for the vehicle is the intention for entering the traveling status.

20. The apparatus according to claim 18, wherein the processing unit is specifically configured to:
determine, in response to a gear switching operation input by the user, that the control intention of the user for the vehicle is the intention for switching the traveling status, wherein the gear switching operation is used to switch the vehicle from a first gear to a second gear, the second gear is a reverse gear or a drive gear, and the first gear is different from the second gear.

21. The apparatus according to any one of claims 18 to 20, wherein the control unit is specifically configured to:
when the control intention is the intention for entering the traveling status, control, based on the human eye location data, the rear view mirror of the vehicle to be adjusted to a first location; or
when the control intention is the intention for switching the traveling status, control, based on the human eye location data, the rear view mirror of the vehicle to be adjusted to a second location.

22. The apparatus according to any one of claims 18 to 21, further comprising:
an obtaining unit, configured to obtain the human eye location data of the user, wherein the human eye location data is determined based on a collected user image.

23. The apparatus according to claim 22, wherein the control intention is the intention for controlling the vehicle to enter the traveling status, and further comprises:
a collection unit, configured to collect the user image in response to the user taking the vehicle.

24. The apparatus according to claim 20, wherein the control intention is the intention for controlling the vehicle to switch the traveling status, and further comprises:
a collection unit, configured to collect the user image when the vehicle travels in the first gear or the second gear.

25. The apparatus according to any one of claims 22 to 24, wherein the processing unit is further configured to:
recognize the user image to obtain head pose information of the user;
determine, based on the head pose information, whether duration in which a face of the user faces a first direction reaches preset duration; and
determine the human eye location data based on the user image when the duration in which the face of the user faces the first direction reaches the preset duration.

26. The apparatus according to claim 25, wherein the control intention is the intention for controlling the vehicle to enter the traveling status, and the first direction is a front direction of the user.

27. The apparatus according to any one of claims 22 to 26, wherein the processing unit is further configured to:
determine the human eye location data based on the user image when a seat taken by the user is not adjusted in a first time period, wherein the first time period is collection duration of the user image.

28. The apparatus according to any one of claims 22 to 27, further comprising a human-machine interaction unit, wherein the human-machine interaction unit is configured to:
if the human eye location data fails to be obtained, display prompt information, wherein
the prompt information indicates that the duration in which the face of the user faces the first direction reaches the preset duration, and/or indicates that adjustment of the seat taken by the user is stopped.

29. The apparatus according to any one of claims 18 to 28, wherein the control intention is an intention for controlling the vehicle to switch from a backward traveling state to a forward traveling state; and
the control unit is specifically configured to:
determine whether a vehicle speed of the vehicle in the forward traveling state is greater than or equal to a speed threshold; and
when the vehicle speed of the vehicle is greater than or equal to the speed threshold, control, based on the control intention and the human eye location data, the rear view mirror of the vehicle to be adjusted to the first target location.

30. The apparatus according to any one of claims 18 to 29, wherein the control unit is specifically configured to:
determine a displacement between the first target location and a current location of the rear view mirror based on the control intention and the human eye location data; and
when the displacement is greater than or equal to a displacement threshold, control the rear view mirror of the vehicle to be adjusted to the first target location.

31. The apparatus according to any one of claims 18 to 30, wherein the control unit is specifically configured to:
obtain a first adjustment instruction input by the user, wherein the first adjustment instruction instructs to adjust the rear view mirror of the vehicle; and
control, based on the first adjustment instruction and the human eye location data, the rear view mirror to be adjusted to a second target location.

32. The apparatus according to claim 31, wherein the control unit is specifically configured to:
obtain, within a preset time after obtaining the first adjustment instruction, a second adjustment instruction input by the user, wherein the second adjustment instruction instructs to adjust the rear view mirror of the vehicle in a target direction; and
control, based on the second adjustment instruction, the rear view mirror to be adjusted from the second target location to a third target location in the target direction.

33. The apparatus according to claim 31 or 32, wherein any adjustment instruction comprises a voice control instruction of the user or an instruction input by the user by operating a physical button.

34. The apparatus according to any one of claims 18 to 33, wherein the processing unit is further configured to:
determine a to-be-adjusted rear view mirror based on the human eye location data.

35. A control apparatus, comprising a processor and a memory, wherein the memory is configured to store a computer program, and the processor is configured to invoke and run the computer program stored in the memory, to perform the method according to any one of claims 1 to 17.

36. A chip, comprising a processor, configured to invoke computer instructions from a memory and run the computer instructions, so that a device in which the chip is installed performs the method according to any one of claims 1 to 17.

37. A computer-readable storage medium, configured to store computer program instructions, wherein the computer program enables a computer to perform the method according to any one of claims 1 to 17.

38. A computer program product, comprising computer program instructions, wherein the computer program instructions enable a computer to perform the method according to any one of claims 1 to 17.

39. A vehicle, comprising the control apparatus according to any one of claims 18 to 34.
